# EUROPÄISCHE PATENTSCHRIFT

(11) **EP 3 860 898 B1**
(45) Veröffentlichungstag und Bekanntmachung des Hinweises auf die Patenterteilung: **12.03.2025**
(21) Anmeldenummer: 19801706.3
(22) Anmeldetag: 28.10.2019
(51) Int. Cl.: B61D 19/02, B61L 15/00

(54) **VERFAHREN ZUR VERHINDERUNG DER DEAKTIVIERUNG EINER UNZULÄSSIGEN ANZAHL VON GLEICHARTIGEN KOMPONENTEN EINES SCHIENENFAHRZEUGS**
METHOD FOR PREVENTING THE DEACTIVATION OF AN IMPERMISSIBLE NUMBER OF COMPONENTS OF A RAIL VEHICLE OF THE SAME TYPE
PROCÉDÉ POUR EMPÊCHER LA DÉSACTIVATION D'UN NOMBRE INADMISSIBLE DE COMPOSANTS SIMILAIRES D'UN VÉHICULE FERROVIAIRE

(30) Priorität: 15.11.2018 AT 510052018
(43) Veröffentlichungstag der Anmeldung: 11.08.2021
(73) Patentinhaber: Siemens Mobility Austria GmbH, 1210 Wien (AT)
(72) Erfinder: BERGER, Christian, 3443 Rappoltenkirchen (AT)
(74) Vertreter: Siemens Patent Attorneys
(86) Internationale Anmeldenummer: PCT/EP2019/079425
(87) Internationale Veröffentlichungsnummer: WO 2020/099111

(56) Entgegenhaltungen:
- EP-A1- 0 168 520
- WO-A1-2007/014735
- CN-A- 105 401 824

## Beschreibung

### Technisches Gebiet

Die Erfindung betrifft ein Verfahren zur Verhinderung der Deaktivierung einer unzulässigen Anzahl von gleichartigen Komponenten eines Schienenfahrzeugs, sowie ein entsprechendes Steuergerät.

### Stand der Technik

Schienenfahrzeuge, insbesondere Passagierschienenfahrzeuge sind mit einer Vielzahl an Komponenten ausgestattet, wobei einige Arten von Komponenten gleichartig und in einer Mehrzahl vorgesehen sind. Beispielsweise sind Passagiereinstiege typischerweise gleichartig ausgeführt und weisen jeweils dieselben Türantriebe, Spaltüberbrückungen, Türsteuerungen, etc. auf. Andere gleichartige Komponenten können beispielsweise Fahrwerke sein, welche mit gleichartig aufgebauten Antrieben oder Bremssystemen ausgestattet sind. In einem Fehlerfall, wenn eine einzelne Komponente, z.B. ein bestimmter Türantrieb defekt ist, so kann die Komponente außer Betrieb gesetzt werden und beispielsweise die betroffene Tür in geschlossener Position verriegelt werden. Dies erfolgt typischerweise manuell durch das Fahrpersonal. Bei vollautomatischem, fahrerlosem Betrieb ist dies nicht möglich, sodass eine ferngesteuerte Blockierung einzelner Türen vorgesehen wird. Allerdings darf nur eine maximale Anzahl an Türen eines Zuges blockiert werden, da sonst eine Evakuierung der Passagiere in einem Notfall behindert wäre.

Länder- oder Betreiberspezifische Zulassungsvorschriften geben die maximale Anzahl gleichzeitig blockierter Türen an, welche im Betrieb mit Passagieren nicht überschritten werden darf. Im personalbesetzten Betrieb ist dies problemlos, da das Fahrpersonal bei Ausfall mehrerer Türen als zulässig keine passagierbesetzte Weiterfahrt durchführt. Im vollautomatischen Betrieb könnte ein Defekt an der Fahrzeugsteuerung diese maximale Anzahl gleichzeitig blockierter Türen überschreiten, sogar alle Türen eines Zuges blockieren. Sollte dies ferngesteuert nicht mehr behebbar sein, kann im Extremfall die Tür nicht mehr zerstörungsfrei geöffnet werden, da sie von innen durch die Passagiere nicht mehr öffenbar ist und von außen auch keine Öffnungsmittel vorhanden sind. Insbesondere sehen Lösungen aus dem Stand der Technik nicht vor, die von einer fehlerhaften Fahrzeugsteuerung abgesandten Befehle zur Blockierung von Türen auf ihre Zulässigkeit hin zu überprüfen und im Fehlerfall deren Ausführung zu verhindern. Ebenso ist zu beachten, dass die Datenkommunikation zwischen einer Fahrzeugsteuerung und den Türsteuerungen ohne besondere Maßnahmen zur Datensicherung oder Verschlüsselung erfolgt, fehlerhaft abgesandte Datentelegramme, welche jedoch ein korrektes Datenformat aufweisen werden jedenfalls als gültig erkannt. Bei anderen Komponenten, beispielsweise Bremssystemen können ähnliche Fälle auftreten, sodass unbedingt ein Deaktivieren einer unzulässigen Anzahl an Komponenten verhindert werden muss. Auch bei Antrieben kann nur eine bestimmte Anzahl von Antrieben eines Triebzuges deaktiviert sein, da sonst die mögliche Beschleunigung nicht mehr das geforderte Mindestmaß erreicht oder Steigungen nicht mehr befahrbar sein können.

Das Dokument WO 2007 014 735 A1 beschreibt ein Verfahren zum Außer-Betrieb-Setzen defekter Türen eines Schienenfahrzeugs.

### Darstellung der Erfindung

Der Erfindung liegt daher die Aufgabe zugrunde, das gleichzeitige Deaktivieren einer unzulässigen Anzahl von gleichartigen Komponenten eines Schienenfahrzeugs verhindern zu können.

Die Aufgabe wird durch ein Verfahren zur Verhinderung der Deaktivierung einer unzulässigen Anzahl von gleichartigen Komponenten in einem Schienenfahrzeug mit den Merkmalen des Anspruchs 1 und ein Steuergerät nach Anspruch 5 gelöst. Vorteilhafte Ausgestaltungen sind Gegenstand untergeordneter Ansprüche.

Dem Grundgedanken der Erfindung nach wird ein Verfahren beschrieben, welches in einem Steuergerät ausgeführt wird und welches folgende Verfahrensschritte umfasst:
- Empfang eines Deaktivierbefehls,
- Inkrementieren eines Zählers, wenn der Deaktivierbefehl an ein anderes Steuergerät adressiert ist,
- Vergleich des Standes des Zählers mit einem Maximalwert,
- Ignorieren des Deaktivierbefehls wenn der Zählerstand dem Maximalwert entspricht,
- Ausführen des Deaktivierbefehls wenn der Zählerstand kleiner als der Maximalwert ist.

Dadurch ist der Vorteil erzielbar, dass niemals mehr als die dem Maximalwert entsprechende Anzahl an Komponenten gleichzeitig blockiert werden können. Eine fehlerbehaftete Fahrzeugsteuerung, welche diese maximale Anzahl überschreitet und Deaktivierbefehle an mehr als diese maximale Anzahl an Steuergeräten sendet, kann eine gleichzeitige Deaktivierung von mehr als einer vorgegebenen Anzahl von Komponenten nicht bewirken. Somit ist sichergestellt, dass auch bei einer Fehlfunktion einer Fahrzeugsteuerung genügend Komponenten in Betrieb verbleiben um einen sicheren Fahrbetrieb (z.B. durch Gewährleistung der Möglichkeit zur Evakuierung der Passagiere) durchführen zu können. Beispielweise kann bei der Deaktivierung von Passagierraumtüren der Maximalwert gleichzeitig gesperrter Passagierraumtüren bei einem U-Bahnzug mit 18 Passagiereinstiegen 2 betragen.

Erfindungsgemäß sind alle gleichartigen, von dem Verfahren betroffenen Komponenten eines Schienenfahrzeugs, bzw. eines Zugverbundes (beispielsweise ein U-Bahn Zug) mit einem Steuergerät auszustatten, welches das erfindungsgemäße Verfahren ausführt. Solcherart ist sichergestellt, dass in jedem Steuergerät jeder von einer Fahrzeugsteuerung abgesandte Deaktivierbefehl registriert wird, auch wenn das jeweilige Steuergerät von dem Deaktivierbefehl nicht betroffen ist, der Deaktivierbefehl also an ein weiteres Steuergerät adressiert ist. Somit ist in jedem Steuergerät zu jedem Zeitpunkt die aktuelle Anzahl an deaktivierten gleichartigen Komponenten des Schienenfahrzeugs, bzw. Zugverbundes abgespeichert.

Wird ein weiterer Deaktivierbefehl empfangen, so vergleicht das betroffene Steuergerät die in ihm gespeicherte aktuelle Anzahl deaktivierter gleichartiger Komponenten und weist den Deaktivierbefehl dann ab, wenn die aktuelle Anzahl deaktivierter Komponenten dem Maximalwert der erlaubten gleichzeitig deaktivierten Komponenten entspricht. Wenn die aktuelle Anzahl deaktivierter Komponenten kleiner als der Maximalwert der erlaubten gleichzeitig deaktivierten Komponenten ist, so führt das betroffene Steuergerät den Blockierbefehl aus.

Sollte zusätzlich zu der Fahrzeugsteuerung auch eines der Steuergeräte defekt werden und das erfindungsgemäße Verfahren nicht oder falsch ausführen und dabei eine Deaktivierung der zugeordneten Komponente doch zulassen, so kann in diesem sehr unwahrscheinlichen Doppelfehlerfall auch nur eine weitere Komponente blockiert werden, keinesfalls jedoch alle des gesamten Fahrzeugs bzw. Zugs.

In weiterer Fortbildung des Verfahrens ist es empfehlenswert, einen weiteren Verfahrensschritt vorzusehen, bei welchem jedes Steuergerät seinen jeweiligen Status, also ob die zugeordnete Komponente aktiviert oder deaktiviert ist, an die Fahrzeugsteuerung rückmeldet.

### Kurzbeschreibung der Zeichnungen

Es zeigen beispielhaft:
- **Fig.1**: Schienenfahrzeug.
- **Fig.2**: Flußdiagramm.
- **Fig.3**: Türsteuergerät, Blockschaltbild.

### Ausführung der Erfindung

Im Folgenden ist das erfindungsgemäße Verfahren am Beispiel des Einsatzes an Türsteuerungen eines Passagierfahrzeugs dargestellt.

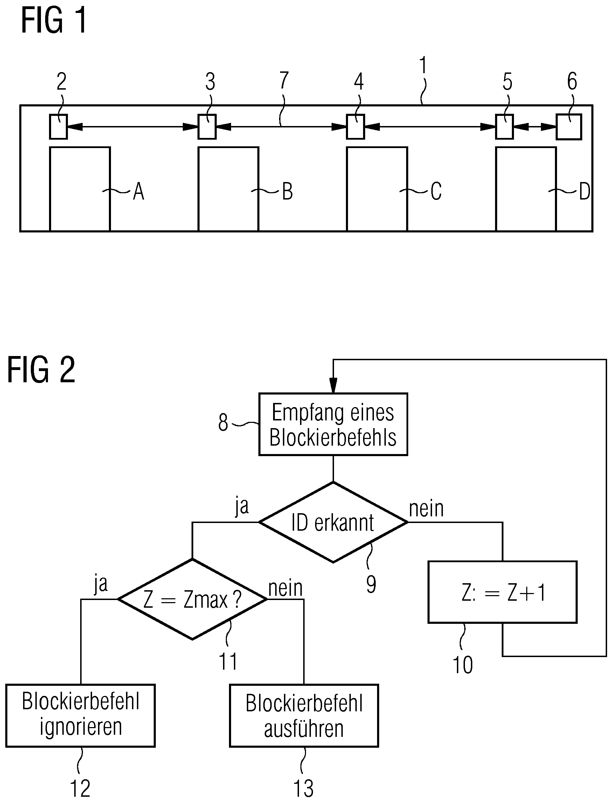

Fig.1 zeigt beispielhaft und schematisch ein Schienenfahrzeug. Es ist stark abstrahiert ein Passagierschienenfahrzeug mit gleichartigen Komponenten (Passagierraumtüren) A, B, C, D dargestellt, welche jeweils mit einem Türantrieb und einem zugehörigen Steuergerät (Türsteuergerät) 2, 3, 4, 5 ausgestattet sind. Die Bauart der Passagierraumtüren A, B, C, D ist ohne Belang, es kann sich um jede bei Passagierfahrzeugen gebräuchliche Art handeln, beispielsweise um zweiflügelige Schwenk-Schiebetüren. Das Schienenfahrzeug 1 umfasst eine Fahrzeugsteuerung 6, welche übergeordnete Steuerungsaufgaben durchführt und über einen Datenbus 7 mit den Türsteuerungen 2, 3, 4, 5 verbunden ist an die Türsteuerungen 2, 3, 4, 5 Befehle übermitteln kann. Gezeigtes Ausführungsbeispiel stellt einen Wagen eines Zugverbundes dar, die Fahrzeugsteuerung 6 kann jedoch auch für einen gesamten Zugverbund vorgesehen sein. Dies ist insbesondere für Zugverbände, welche betriebsmäßig nicht getrennt werden vorteilhaft, beispielsweise bei U-Bahnen.

**Fig.2** zeigt beispielhaft und schematisch ein Flußdiagramm des erfindungsgemäßen Verfahrens wie es in jedem der Steuergeräte (Türsteuergeräte) 2, 3, 4, 5 ausgeführt wird. Dabei besitzt jedes Türsteuergerät 2, 3, 4, 5 eine ihm eigene Kennnummer (ID), über welche es eindeutig über den Datenbus 7 adressierbar ist. In einem ersten Verfahrensschritt 8 wird ein Blockierbefehl durch ein Türsteuergerät empfangen. In einem weiteren Verfahrensschritt 9 wird die mit dem Deaktivierbefehl mitgesandte Kennummer (ID) mit der des jeweiligen Türsteuergeräts verglichen. Ist das Türsteuergerät durch diese Kennummer nicht adressiert, so inkrementiert es eine Zählvariable. Weitere Verfahrensschritte werden dabei nicht ausgeführt und das Verfahren setzt an seinem Ausgangspunkt fort. Ist im Verfahrensschritt 9, bei welchem die mit dem Blockbefehl mitgesandte Kennummer (ID) mit der des jeweiligen Türsteuergeräts verglichen wird eine Identität der Kennummern festgestellt worden, das jeweilige Türsteuergerät also von der Fahrzeugsteuerung 6 adressiert worden, so setzt das Verfahren fort. Dabei wird in einem weiteren Verfahrensschritt 11 die Zählvariable ausgelesen und mit einem bestimmten Wert, dem Maximalwert gleichzeitig blockierter Türen verglichen. Sind beide Werte gleich, so ist bereits die maximale zulässige Anzahl an Türen blockiert, so wird in einem weiteren Verfahrensschritt 12 der Blockierbefehl ignoriert und das betroffene Türsteuergerät belässt die Tür in ihrem bestehenden Status. Ist die maximale Anzahl gleichzeitig blockierter Türen noch nicht erreicht, der Wert der Zählvariable also kleiner als dieser Maximalwert, so wird in einem Verfahrensschritt 13 der Blockierbefehl von dem betroffenen Türsteuergerät ausgeführt.

Eine Rücksetzung, d.h. Wiederfreigabe der Blockierung einer Tür durch die Fahrzeugsteuerung 6 kann vorgesehen werden, es ist jedoch sehr empfehlenswert, dies ausschließlich in einer Wartungseinrichtung vorzunehmen und keinesfalls während des passagierbesetzten Betriebs. So kann verhindert werden, dass bei fehlerhaften Türen irrtümlich deren Blockierung aufgehoben wird und sich ggf. diese Türen während der Fahrt öffnen können. Ebenso ist eine Rücksetzung der Zählvariable in ihren Grundzustand, bei welchem sie mit dem Wert Null belegt ist, vorzugsweise in einer Wartungseinrichtung vorzunehmen. Dies stellt keinen Nachteil dar, da ein längerer Fahrbetrieb mit defekten und somit blockierten Türen ohnedies nicht durchgeführt wird und eine Wartung unumgänglich ist.

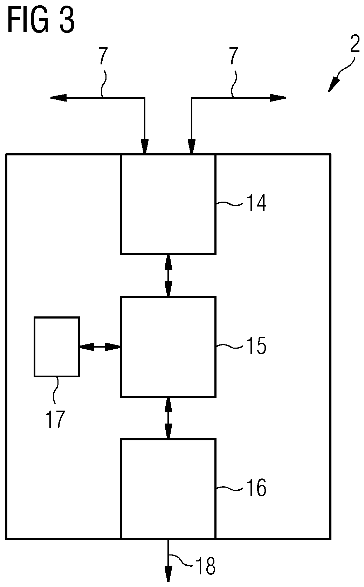

**Fig.3** zeigt beispielhaft und schematisch ein Blockschaltbild eines Steuergeräts (Türsteuergeräts). Es ist ein Türsteuergerät 2 dargestellt, wie es baugleich bei allen Türen A, B, C, D eines Schienenfahrzeugs 1 eingesetzt ist.

Das Türsteuergerät 2 umfasst eine Datenschnittstelle 14 zur Datenkommunikation über einen Datenbus 7. Dabei ist diese Datenschnittstelle 14 so ausgeführt, dass über sie jegliche Kommunikation über den Datenbus 7 erfassbar ist, auch wenn ein konkretes Datentelegramm an ein weiteres Türsteuergerät adressiert ist. Weiters umfasst das Türsteuergerät 2 ein Rechenmittel 15, beispielsweise einen Mikroprozessor, welches die Verfahrensschritte durchführt. An dieses Rechenmittel 15 ist ein Datenspeicher 17 angeschlossen, in welchem die Zählvariable und ggf. weitere Daten speicherbar sind. Des weiteren umfasst das Türsteuergerät 2 eine Steuerschnittstelle 16, welche die von dem Rechenmittel 15 bestimmten Steuerbefehle 18 an weitere Komponenten einer Passagierraumtür, beispielsweise einem Türantrieb leitet.

### Liste der Bezeichnungen

- 1: Schienenfahrzeug
- 2: Steuergerät der 1. Passagierraumtür
- 3: Steuergerät der 2. Passagierraumtür
- 4: Steuergerät der 3. Passagierraumtür
- 5: Steuergerät der 4. Passagierraumtür
- 6: Fahrzeugsteuerung
- 7: Datenbus
- 8: Verfahrensschritt Befehlsempfang
- 9: Verfahrensschritt Adressierungsprüfung
- 10: Verfahrensschritt Zählvariable inkrementieren
- 11: Verfahrensschritt Zählvariable prüfen
- 12: Verfahrensschritt Blockierbefehl ignorieren
- 13: Verfahrensschritt Blockierbefehl ausführen
- 14: Datenschnittstelle
- 15: Rechenmittel
- 16: Steuerschnittstelle
- 17: Datenspeicher
- 18: Steuerausgang
- A: 1. Komponente
- B: 2. Komponente
- C: 3. Komponente
- D: 4. Komponente

## Patentansprüche

1. Verfahren zur Verhinderung der Deaktivierung einer unzulässigen Anzahl von gleichartigen Komponenten (A, B, C, D) eines Schienenfahrzeugs (1) mit einer Mehrzahl der gleichartigen Komponenten (A, B, C, D), welche jeweils mit einem zugeordneten Steuergerät (2, 3, 4, 5) ausgestattet sind, mit welchen die Komponenten (A, B, C, D) durch einen Deaktivierbefehl (8) deaktivierbar sind, und wobei eine Fahrzeugsteuerung (6) des Schienenfahrzeugs (1) zur Übermittlung von Deaktivierbefehle an die Steuergeräte (2, 3, 4, 5) eingerichtet ist, wobei das Verfahren durch Rechenmittel (15) in jedem Steuergerät (2, 3, 4, 5), umfassend einen Zähler, ausgeführt wird, mit folgenden Verfahrensschritten:
- Empfang eines Deaktivierbefehls (8),
- Inkrementieren (10) eines Zählers wenn der Deaktivierbefehl an ein anderes Steuergerät adressiert ist,
- Vergleich des Standes des Zählers mit einem Maximalwert (11),
- Ignorieren des Deaktivierbefehls (12) wenn der Zählerstand dem Maximalwert entspricht,
- Ausführen des Deaktivierbefehls (13) wenn der Zählerstand kleiner als der Maximalwert ist.

2. Verfahren nach Anspruch 1, wobei die Komponenten (A, B, C, D) als Passagierraumtüren und die Steuergeräte (2, 3, 4, 5) als Türsteuergeräte ausgeführt sind.

3. Verfahren nach Anspruch 1, wobei die Komponenten (A, B, C, D) als Antriebe und die Steuergeräte (2, 3, 4, 5) als Antriebssteuergeräte ausgeführt sind.

4. Verfahren nach Anspruch 1, wobei die Komponenten (A, B, C, D) als Bremsen und die Steuergeräte (2, 3, 4, 5) als Bremssteuergeräte ausgeführt sind.

5. Steuergerät (2, 3, 4, 5) für eine Komponente (A, B, C, D) eines Schienenfahrzeugs (1), umfassend eine Schnittstelle zur Datenkommunikation (14), Rechenmittel (15), Datenspeicher (17) und eine Steuerschnittstelle (16), **dadurch gekennzeichnet, dass**
das Rechenmittel (15) zur Ausführung eines Verfahrens nach Anspruch 1 eingerichtet ist.

## Claims

1. Method for preventing the deactivation of an impermissible number of components (A, B, C, D) of a rail vehicle (1) of the same type with a plurality of components (A, B, C, D) of the same type, which are each equipped with an assigned control device (2, 3, 4, 5), with which the components (A, B, C, D) can be deactivated by a deactivation command (8), and wherein a vehicle controller (6) of the rail vehicle (1) is designed to transmit deactivation commands to the control devices (2, 3, 4, 5), wherein the method is executed by computing means (15) in each control device (2, 3, 4, 5) comprising a counter, having the following method steps:
- receiving a deactivation command (8),
- incrementing (10) a counter when the deactivation command is addressed to another control device,
- comparing the state of the counter with a maximum value (11),
- ignoring the deactivation command (12) when the counter state corresponds to the maximum value,
- executing the deactivation command (13) when the counter state is smaller than the maximum value.

2. Method according to claim 1, wherein the components (A, B, C, D) are embodied as passenger compartment doors and the control devices (2, 3, 4, 5) are embodied as door control devices.

3. Method according to claim 1, wherein the components (A, B, C, D) are embodied as drives and the control devices (2, 3, 4, 5) are embodied as drive control devices.

4. Method according to claim 1, wherein the components (A, B, C, D) are embodied as brakes and the control devices (2, 3, 4, 5) are embodied as brake control devices.

5. Control device (2, 3, 4, 5) for a component (A, B, C, D) of a rail vehicle (1), comprising an interface for data communication (14), computing means (15), data memory (17) and a control interface (16), **characterised in that** the computing means (15) is designed to execute a method according to claim 1.

## Revendications

1. Procédé pour empêcher la désactivation d'un nombre excessif de composants similaires (A, B, C, D) d'un véhicule ferroviaire (1) comprenant une pluralité des composants similaires (A, B, C, D), lesquels sont respectivement équipés d'un appareil de commande associé (2, 3, 4, 5), à l'aide duquel les composants (A, B, C, D) peuvent être désactivés par une instruction de désactivation (8), et dans lequel une commande de véhicule (6) du véhicule ferroviaire (1) est agencée pour transmettre des instructions de désactivation aux appareils de commande (2, 3, 4, 5), dans lequel le procédé est réalisé par des moyens de calcul (15) dans chaque appareil de commande (2, 3, 4, 5), comprenant un compteur, avec les étapes de procédé suivantes consistant à :
- recevoir une instruction de désactivation (8),
- incrémenter (10) un compteur si l'instruction de désactivation est adressée à un autre appareil de commande,
- comparer l'état du compteur avec une valeur maximale (11),
- ignorer l'instruction de désactivation (12) lorsque le relevé de compteur correspond à la valeur maximale,
- exécuter l'instruction de désactivation (13) lorsque le relevé de compteur est inférieur à la valeur maximale.

2. Procédé selon la revendication 1, dans lequel les composants (A, B, C, D) sont conçus sous la forme de portes de compartiment passagers et les appareils de commande (2, 3, 4, 5) sont conçus sous la forme d'appareils de commande de porte.

3. Procédé selon la revendication 1, dans lequel les composants (A, B, C, D) sont réalisés sous la forme d'entraînements et les appareils de commande (2, 3, 4, 5) sont réalisés sous la forme d'appareils de commande d'entraînement.

4. Procédé selon la revendication 1, dans lequel les composants (A, B, C, D) sont réalisés sous la forme de freins et les appareils de commande (2, 3, 4, 5) sont réalisés sous la forme d'appareils de commande de frein.

5. Dispositif de commande (2, 3, 4, 5) pour un composant (A, B, C, D) d'un véhicule ferroviaire (1), comprenant une interface pour une communication de données (14), des moyens de calcul (15), une mémoire de données (17) et une interface de commande (16), **caractérisé en ce que** les moyens de calcul (15) sont conçus pour exécuter un procédé selon la revendication 1.
